# FASCICULE DE BREVET EUROPEEN

(11) **EP 0 927 632 B1**
(45) Date de publication et mention de la délivrance du brevet: **15.10.2003**
(21) Numéro de dépôt: 98123498.2
(22) Date de dépôt: 14.12.1998
(51) Int. Cl.: B41F 35/00, C02F 1/56

(54) **Procédé de production de solution d'essuyage fraîche et de traitement de solution d'essuyage usée et dispositif de mise en oeuvre**
Vorrichtung und Verfahren zum Herstellen einer Reinigungslösung und zum Behandeln der verwendeten Reinigungslösung
Method and device for preparing a fresh cleaning solution and for treating the used solution

(30) Priorité: 31.12.1997 IT MI972906
(43) Date de publication de la demande: 07.07.1999
(73) Titulaire: KBA-GIORI S.A., 1002 Lausanne (CH)
(72) Inventeur: Martini, Giacomo, 20032 Cormano (IT)
(74) Mandataire: Kiliaridis, Constantin

(56) Documents cités:
- EP-A- 0 636 401
- EP-A- 0 826 502
- WO-A-93/02967
- US-A- 5 200 094
- US-A- 5 390 598
- US-A- 5 456 829

## Description

La présente invention concerne un procédé de production de solution d'essuyage fraîche et de traitement de cette solution d'essuyage contaminée par les encres d'une ou plusieurs machines d'impression taille-douce fonctionnant en circuit fermé et un dispositif pour la mise en oeuvre de ce procédé.

Dans les machines d'impression taille-douce, les plaques d'impression montées sur le cylindre porte-plaque, dans lesquelles les dessins sont engravés, sont essuyées par le frottement d'un cylindre d'essuyage tournant dans le même sens que le cylindre porte-plaque et qui enlève l'encre se trouvant en dehors des tailles de la plaque. Pour effectuer le nettoyage de l'encre se trouvant sur le cylindre d'essuyage, la partie inférieure de celui-ci se trouve dans une cuve d'essuyage, cette cuve étant en outre équipée de brosses et de râcles. Un système de buses gicle de la solution d'essuyage fraîche sur le cylindre d'essuyage et la solution fraîche une fois mélangée à l'encre va sortir de la cuve d'essuyage comme solution usée.

A titre d'exemple, le brevet US 5,390,598 décrit une telle installation de nettoyage permanent du cylindre d'essuyage dans une machine d'impression taille-douce.

Actuellement, de nouvelles encres ont été développées, et celles-ci permettent de mettre en oeuvre un procédé d'essuyage utilisant une solution à base d'eau qui est beaucoup moins nocive pour l'environnement que les solutions d'essuyage utilisées précédemment. Ces nouvelles encres utilisées dans le processus d'impression taille-douce sont connues, par exemple des brevets US 4,966,628 et EP 0 340 163. De telles encres comprennent entre autres des composants oléorésineux et des pigments. Des solutions d'essuyage à base d'eau utilisées dans de telles machines d'impression taille-douce avec ces nouvelles encres sont également connues dans l'état de la technique et ces solutions d'essuyage contiennent, en général, au moins 90% d'eau et des additifs.

L'une de ces solutions d'essuyage est décrite dans le brevet DE 1 546 776 et se compose d'une solution aqueuse contenant 1 à 5% en poids de lessive alcaline, 2 à 10% en poids d'un produit de nettoyage commercial contenant du phosphate alcalin et 1 à 10% en poids d'un agent mouillant. Plus particulièrement, cette solution aqueuse contient 1,5 à 2,5% en poids de soude caustique NaOH, 2 à 5% en poids de phosphate de sodium Na₃(PO₄) et 1 à 3% en poids d'huile de ricin sulfonée.

Une autre de ces solutions d'essuyage est décrite dans le brevet US 3,389,656 et se compose d'une solution aqueuse contenant environ 1 à 5% en poids d'une base forte, comme par exemple l'hydroxyde de potassium ou l'hydroxyde de sodium ou encore l'hydroxyde d'ammonium, environ 2 à 10% en poids d'un détergent, par exemple du polyphosphate de sodium, et environ 0,3 à 10% en poids d'un agent mouillant tel que de l'huile de ricin sulfonée.

De nouvelles encres qui sont apparues sur le marché récemment ont même rendu inutiles les additifs ajoutés à l'eau dans les solutions d'essuyage décrites ci-dessus. Ainsi, la solution d'essuyage peut même n'être composée que d'eau adoucie.

Un procédé de production de solution d'essuyage fraîche et de traitement de solution d'essuyage usée connu dans l'état de la technique comporte les étapes suivantes:
(a) production de solution d'essuyage fraîche,
(b) introduction de la solution d'essuyage fraîche dans une ou plusieurs cuves d'essuyage et contamination par les encres,
(c) ultrafiltration de la solution usée venant de la ou des cuves d'essuyage, produisant une solution claire et une solution résiduelle concentrée,
(d) recyclage de la solution claire dans le circuit de solution d'essuyage fraîche,
(e) floculation de la solution résiduelle concentrée issue de l'ultrafiltration,
(f) filtration de la solution floculée donnant des résidus solides et une solution,
(g) neutralisation de la solution filtrée avec de l'acide,
(h) réduction de la demande chimique d'oxygène de la solution neutralisée, et
(i) rejet à l'égout de la solution réduite.

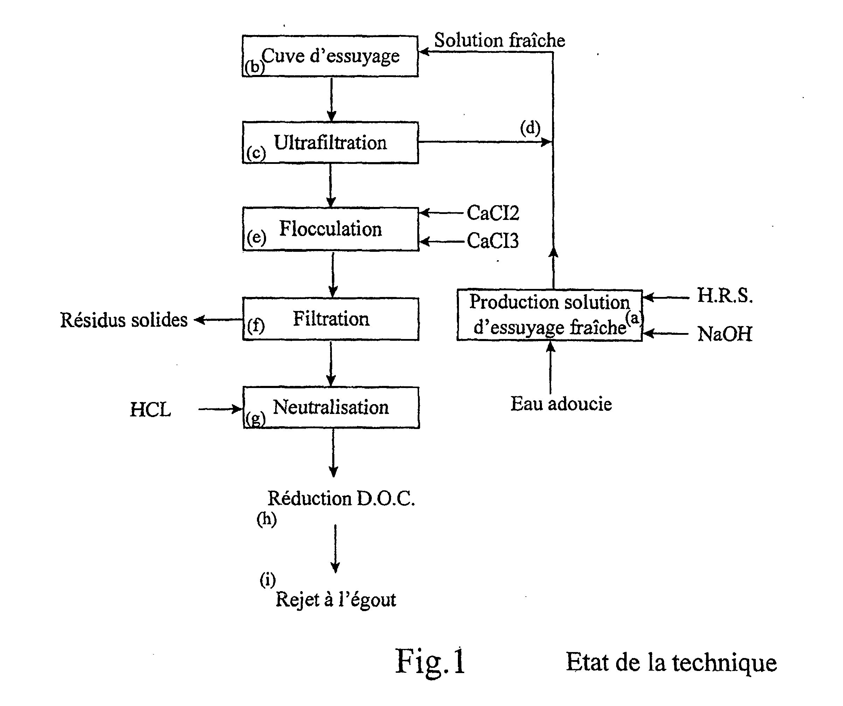

Un exemple d'un tel procédé est donné sous forme de schéma bloc à la figure 1.

La capacité de recyclage de ce procédé après ultrafiltration est d'environ 80%, cette valeur dépendant en plus de la qualité de l'encre utilisée et de sa concentration dans la solution d'essuyage.

L'inconvénient majeur de ce procédé est que la solution résiduelle traitée et envoyée à l'égout contient une grande quantité de sel. Ces sels sont principalement des chlorures provenant des produits de floculation et de neutralisation, et ainsi que des sulfates si l'on a utilisé de l'acide sulfurique pour la neutralisation. La présence de quantité importante de chlorures et/ou de sulfates de même que la demande chimique en oxygène qui peut être considérablement réduite mais non entièrement éliminée pose des problèmes dans de nombreux pays.

En plus, en fonction du nombre de machines utilisées, la consommation d'eau et de produits de floculation peut être importante et coûteuse.

Le brevet US 5,456,829 décrit un procédé et un dispositif pour le recyclage de l'eau usée.

Le but de l'invention est d'améliorer les procédés de recyclage de solution d'essuyage connus.

La présente invention a plus particulièrement pour but de réaliser un procédé fonctionnant en circuit fermé, dans lequel la plus grande partie de la solution d'essuyage est récupérée et non plus rejetée à l'égout sous forme d'eau après un traitement approprié. La consommation d'eau du procédé peut ainsi être fortement diminuée et l'on obtiendra seulement des déchets solides que l'on pourra ensuite traiter dans le respect des normes de protection de l'environnement.

L'invention permet aussi de ne plus utiliser de charbon actif qui corrigeait la demande chimique en oxygène.

La présente invention constitue un perfectionnement du procédé et du dispositif qui font l'objet de la demande de brevet européen N° 97810589.8 déposée au nom du même demandeur et publiée sous le N°0 826 502 (cité en vertu de l'article 54(3) -(4) CBE).

Le procédé de production de solution d'essuyage fraîche et de traitement de solution d'essuyage usée selon l'invention est défini par les étapes de la revendication 1. Ce procédé permet de traiter aussi bien les solutions d'essuyage composées uniquement d'eau adoucie que les solutions d'essuyage composées d'eau adoucie et d'additifs.

Le procédé selon l'invention de traitement de solution usée fait appel à un agent chimique séparant les encres de la solution d'essuyage dans l'étape (c). Cet agent chimique présente l'avantage, d'une part, de ne pas modifier les propriétés physico-chimiques de la solution d'essuyage et, d'autre part, de ne pas augmenter le volume des résidus solides. L'agent chimique est formé par un copolymère organique qui a les propriétés suivantes:
- densité 1,08 - 1,09 kg/dm³
- pH environ 7
- poids moléculaire environ 500'000
- viscosité Brookfield 10'000 cps.

L'action de cet agent chimique est similaire à celle d'un floculant traditionnel mais en revanche, la solution d'essuyage peut être réutilisée immédiatement après ultrafiltration puisque ses propriétés ne sont pas modifiées.

L'agent chimique peut éventuellement être mélangé à un produit inorganique qui réagit sur le potentiel des molécules d'encre contenues dans la solution en les déstabilisants.

Les revendications dépendantes 2 à 4 définissent des modes de réalisation particuliers du procédé selon l'invention.

La revendication indépendante 5 définit un dispositif pour la mise en oeuvre du procédé selon l'invention.

Les revendications dépendantes 6 à 8 définissent des modes de réalisation particuliers du dispositif pour la mise en oeuvre du procédé.

La présente invention sera mieux comprise grâce à la description d'un mode de réalisation et des dessins qui l'accompagnent.

La figure 1 est le schéma bloc d'un procédé de traitement de solution d'essuyage connu dans l'état de la technique.

La figure 2 est le schéma bloc d'un mode d'exécution du procédé de recyclage de la solution d'essuyage selon l'invention.

La figure 3 est le schéma bloc d'un mode d'exécution d'un dispositif de mise en oeuvre du procédé selon l'invention.

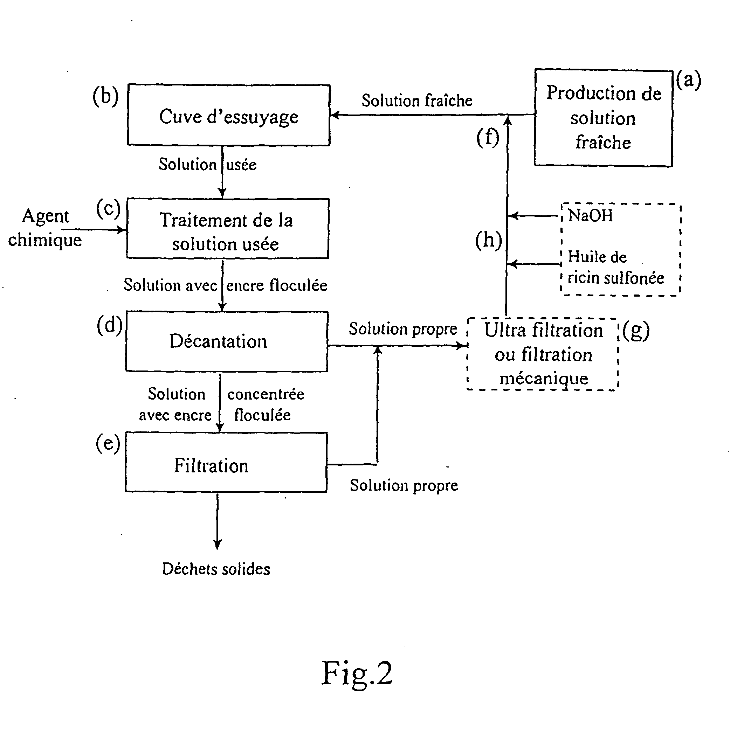

Le procédé selon l'invention est tout d'abord décrit en référence à la figure 2.

Dans le cas où la solution d'essuyage fraîche est composée d'eau adoucie et d'additifs, elle contient les composants suivants dans les proportions indiquées:
- ) eau adoucie 98,5%
- ) soude caustique NaOH 1%
- ) huile de ricin sulfonée 0,5%

La solution d'essuyage peut éventuellement contenir en plus du détergent.

Dans l'étape (a) du procédé, la solution d'essuyage fraîche est produite. Suivant les encres utilisées, la solution d'essuyage est composée uniquement d'eau adoucie, ou bien d'un mélange d'eau adoucie, de soude caustique et d'huile de ricin sulfonée.

La solution fraîche est introduite dans une ou plusieurs cuves d'essuyage à l'étape (b) du procédé et elle est contaminée par les encres.

La solution d'essuyage usée est ensuite transférée de la ou des cuves d'essuyage dans un premier réservoir pour subir l'étape (c) du procédé, à savoir une réaction chimique avec l'agent chimique. Cette réaction résulte dans une séparation de l'encre dans la solution usée, produisant ainsi une solution qui contient de l'encre sédimentée.

La solution contenant l'encre sédimentée subit ensuite l'étape (d) du procédé qui est une décantation permettant d'obtenir, d'une part, une solution propre et, d'autre part, une solution résiduelle concentrée contenant l'encre.

La solution résiduelle concentrée et l'encre sédimentée sont filtrées à l'étape (e) du procédé. Cette filtration produit finalement, d'un côté, des déchets solides et, de l'autre, une solution propre.

La solution propre issue de l'étape (d) et de l'étape (e) du procédé subit ensuite une étape facultative (g) de filtration mécanique ou d'ultrafiltration.

A l'étape facultative (h), la concentration en soude caustique et en huile de ricin sulfonée de la solution propre qui a éventuellement été ultrafiltrée est corrigée si nécessaire et la solution propre rejoint finalement le circuit de solution d'essuyage fraîche à l'étape (f) du procédé.

Les avantages du procédé selon l'invention sont nombreux. En particulier, l'on supprime l'emploi de produits chimiques tels que chlorure de calcium, chlorure de fer, acide sulfurique, charbon actif.

Ce procédé recyclant presque toute l'eau de la solution d'essuyage, la consommation de l'eau prise sur le réseau est ainsi très faible et ne servira qu'à compenser les éventuelles pertes. Le procédé de recyclage selon l'invention a un rendement d'au moins 90%.

De plus, en considérant la flèche quittant le schéma bloc de la figure 2, on constate clairement que seuls des résidus solides ne sont pas réutilisés dans ce procédé tandis que le liquide est maintenu en circuit fermé.

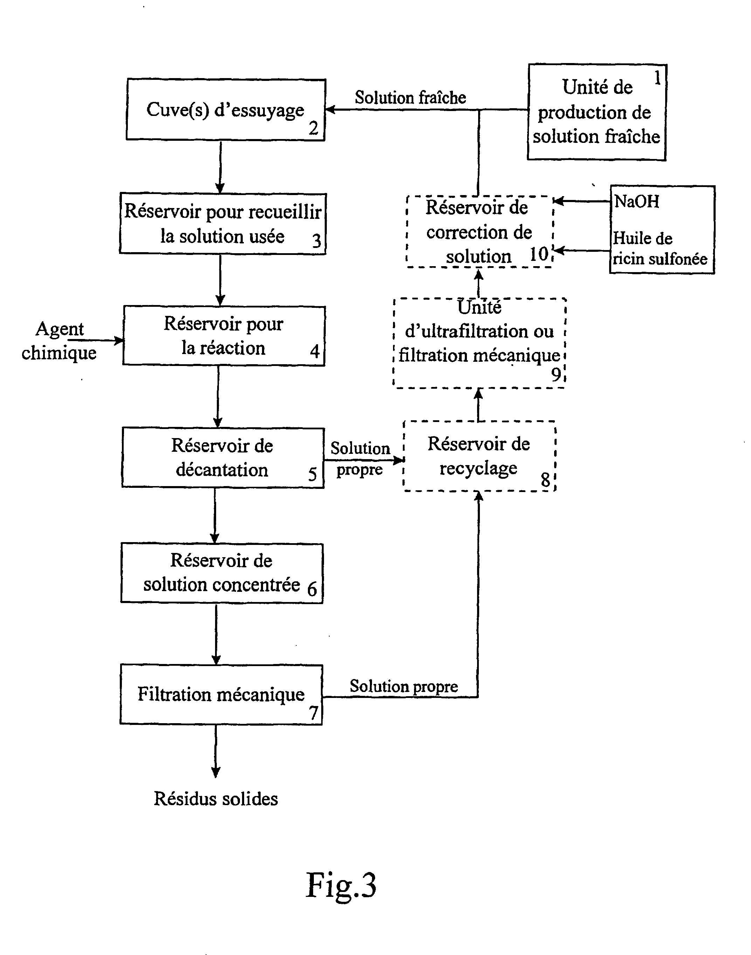

La figure 3 représente un exemple de dispositif permettant la mise en oeuvre du procédé selon l'invention.

Ce dispositif comprend une unité 1 de production de solution d'essuyage fraîche dans laquelle la solution est préparée. La solution d'essuyage est composée soit d'eau adoucie seulement, soit d'eau adoucie mélangée à des additifs (soude caustique NaOH et huile de ricin sulfonée comme indiqué ci-dessus). La solution fraîche est ensuite amenée dans une ou plusieurs cuve(s) d'essuyage 2 où elle est contaminée par les encres. La solution usée est ensuite recueillie dans un premier réservoir 3.

Du premier réservoir 3, la solution usée est transvasée dans un second réservoir 4 dans lequel l'agent chimique est également introduit. Dans ce second réservoir 4, l'agent chimique réagit avec la solution usée de manière à produire une solution et de l'encre sédimentée.

Cette solution et l'encre sédimentée sont transvasées dans un réservoir de décantation 5 dans lequel on obtient une solution propre et une solution concentrée contenant l'encre.

La solution concentrée contenant l'encre est amenée d'abord dans un réservoir de solution concentrée 6 puis dans un système de filtration mécanique 7, comme par exemple une presse filtrante, duquel on extrait, d'un côté, des résidus solides et, de l'autre, une solution propre.

La solution propre issue du réservoir de décantation 5 et la solution propre issue du système de filtration 7 sont récupérées dans un réservoir de recyclage 8 qui est facultatif. La solution propre quitte ensuite le réservoir de recyclage 8 pour passer dans une unité d'ultrafiltration ou de filtration mécanique 9, unité qui est facultative, et de là dans un troisième réservoir 10 dans lequel la concentration en soude caustique et en huile de ricin sulfonée est corrigée si nécessaire.

De ce troisième réservoir 10 finalement, la solution propre est réintroduite dans le circuit de solution fraîche, entre l'unité de production de solution fraîche 1 et la cuve d'essuyage 2.

Dans le cas où la solution d'essuyage n'est composée que d'eau adoucie, ce troisième réservoir 10 peut bien entendu être supprimé et la solution propre du réservoir de recyclage 8 peut être réintroduite directement dans le circuit de solution fraîche.

Afin d'effectuer le transfert des solutions dans les différents réservoirs et unités du dispositif, des moyens de pompage et des canalisations sont utilisés.

Les modes d'exécutions décrits sont donnés à titre d'exemple et des variations dans le cadre de la protection revendiquée sont possibles. Par exemple, la proportion des composants de la solution d'essuyage peut être légèrement variée.

En outre, l'étape de filtration peut être réalisée par une presse filtrante ou par une autre méthode de filtration mécanique.

La composition de l'agent chimique peut aussi être variée en fonction des encres.

## Revendications

1. Procédé de production d'une solution d'essuyage fraîche, comprenant au moins de l'eau adoucie, et de traitement de la solution d'essuyage contaminée par les encres d'une ou plusieurs machines d'impression taille-douce, ledit procédé comportant les étapes suivantes:
(a) production de la solution d'essuyage fraîche,
(b) introduction de la solution d'essuyage fraîche dans une ou plusieurs cuves d'essuyage où elle est contaminée par les encres,
(c) traitement de la solution usée sortant de la ou des cuves d'essuyage avec un agent chimique, produisant une solution et de l'encre sédimentée,
(d) décantation de la solution obtenue à l'étape (c) produisant une solution propre et une solution concentrée avec de l'encre sédimentée,
(e) filtration de la solution concentrée produisant une solution propre et des déchets solides,
(f) utilisation de la solution propre obtenue aux étapes (d) et (e) comme solution d'essuyage fraîche, l'agent chimique étant un copolymère ayant les caractéristiques suivantes:
- densité: 1,08 à 1,09 kg/dm³
- pH: environ 7
- poids moléculaire: environ 500'000
- viscosité Brookfield: environ 10'000 cps.

2. Procédé selon la revendication 1, **caractérisé en ce qu'**avant l'étape (f), le procédé comporte une étape de filtration (g) de la solution propre obtenue aux étapes de décantation (d) et de filtration (e).

3. Procédé selon la revendication 2, dans lequel la solution d'essuyage comprend de l'eau adoucie, de la soude caustique NaOH et de l'huile de ricin comme additifs, **caractérisé en ce que** l'étape de production de la solution d'essuyage fraîche comprend le mélange de l'eau adoucie avec lesdits additifs, et **en ce que** la solution propre subit une étape (h) de correction de la concentration desdits additifs avant son utilisation comme solution d'essuyage fraîche à l'étape (f).

4. Procédé selon la revendication 3, **caractérisé en ce que** la solution d'essuyage fraîche contient environ 98,5% de solution aqueuse, environ 1% de soude caustique NaOH et environ 0,5% d'huile de ricin sulfonée.

5. Dispositif pour la mise en oeuvre d'un procédé de production d'une solution d'essuyage fraîche, comprenant au moins de l'eau adoucie, et de traitement de la solution d'essuyage contaminée par les encres d'une ou plusieurs machines d'impression taille-douce, ledit dispositif comprenant au moins une unité de production de solution d'essuyage fraîche (1), au moins une cuve d'essuyage (2) recevant la solution d'essuyage fraîche et dans laquelle la solution fraîche est contaminée par les encres, un premier réservoir de solution d'essuyage usée (3) recueillant la solution de la cuve d'essuyage (2), un second réservoir (4) qui reçoit la solution d'essuyage du premier réservoir (3) et un agent chimique dans lequel l'agent chimique réagit avec la solution pour produire une solution et de l'encre sédimentée, l'agent chimique étant un copolymère ayant une densité de 1,08 à 1,09 kg/dm³, un pH d'environ 7, un poids moléculaire d'environ 500'000, une viscosité Brookfield d'environ 10'000 cps, un réservoir de décantation (5) recevant la solution et l'encre sédimentée, un réservoir de solution concentrée (6) relié au réservoir de décantation (5) et recevant la solution concentrée et l'encre sédimentée issues de la décantation, un système de filtration (7) filtrant la solution concentrée et l'encre sédimentée, un réservoir de recyclage (8) recevant la solution propre quittant le réservoir de décantation (5) et la solution propre issue du systéme de filtration (7), ledit réservoir de recyclage (8) étant relié au circuit de production de solution d'essuyage fraîche, et des moyens de pompage et de transfert pour transférer lesdites solutions d'un réservoir à l'autre.

6. Dispositif selon la revendication 5, **caractérisé en ce qu'**il comporte une unité d'ultrafiltration (9) ultrafiltrant la solution propre issue du réservoir de recyclage (8).

7. Dispositif selon la revendication 6, **caractérisé en ce que** la solution d'essuyage fraîche est composée d'eau adoucie, d'huile de ricin sulfonée et de soude caustique NaOH, **en ce qu'**il comporte un troisième réservoir (10) dans lequel la concentration des additifs de la solution propre est corrigée, et **en ce qu'**il comporte des moyens pour ajouter la soude caustique NaOH et l'huile de ricin sulfonée dans l'unité de production de solution d'essuyage fraîche (1) et dans le réservoir de correction de solution (10).

8. Dispositif selon la revendication 7, **caractérisé en ce que** la solution d'essuyage fraîche contient environ 98,5% de solution aqueuse, environ 1% de soude caustique NaOH et environ 0,5% d'huile de ricin sulfonée.

## Patentansprüche

1. Verfahren zum Herstellen einer wenigstens enthärtetes Wasser enthaltenden frischen Reinigungslösung und zum Behandeln der durch die Farben einer oder mehrerer Stichtiefdruckmaschinen verschmutzten Reinigungslösung, wobei dieses Verfahren die folgenden Schritte umfasst:
(a) Herstellen der frischen Reinigungslösung,
(b) Einführen der frischen Reinigungslösung in eine oder mehrere Wischwannen, wo sie mit Farben verschmutzt wird,
(c) Behandeln der aus der oder den Wischwannen kommenden verbrauchten Lösung mit einem Reagenz, wobei eine Lösung und sedimentierte Farbe gebildet werden,
(d) Dekantieren der beim Schritt (c) erhaltenen Lösung, wobei eine saubere Lösung und eine mit sedimentierter Farbe konzentrierte Lösung entsteht,
(e) Filtern der konzentrierten Lösung, wobei eine saubere Lösung und feste Rückstände entstehen,
(f) Verwenden der bei den Schritten (d) und (e) erhaltenen sauberen Lösung als frische Reinigungslösung, wobei das Reagenz ein Copolymer mit folgenden Eigenschaften ist:
- Dichte 1,08 bis 1,09 kg/dm³,
- pH: ungefähr 7,
- Molekulargewicht: ungefähr 500'000,
- Broockfield-Viskosität: ungefähr 10'000 cps.

2. Verfahren nach Anspruch 1, **dadurch gekennzeichnet, dass** vor dem Schritt (f) ein Filtrationsschritt (g) zum Filtern der sauberen Lösung durchgeführt wird, welche beim Dekantieren gemäss Schritt (d) und beim Filtern gemäss Schritt (e) erhalten wurde.

3. Verfahren nach Anspruch 2, bei welchem die Reinigungslösung enthärtetes Wasser, Natriumhydroxid NaOH und Rizinusöl als Zusätze enthält, **dadurch gekennzeichnet, dass** die Herstellung der frischen Reinigungslösung das Mischen des enthärteten Wassers mit den erwähnten Zusätzen umfasst und dass die saubere Lösung einem Schritt (h) zur Korrektur der Konzentration der erwähnten Zusätze vor ihrer Verwendung als frische Reinigungslösung gemäss Schritt (f) unterworfen wird.

4. Verfahren nach Anspruch 3, **dadurch gekennzeichnet, dass** die frische Reinigungslösung ungefähr 98,5% wässrige Lösung, ungefähr 1% Natriumhydroxid NaOH und ungefähr 0,5% sulfoniertes Rizinusöl enthält.

5. Vorrichtung zur Durchführung eines Verfahrens zum Herstellen einer frischen Reinigungslösung, die wenigstens enthärtetes Wasser enthält, und zum Behandeln der durch die Farben einer oder mehrere Stichtiefdruckmaschinen verschmutzten Reinigungslösung, mit wenigstens einer Einheit (1) zum Herstellen frischer Reinigungslösung, mit wenigstens einer Wischwanne (2), welche die frische Reinigungslösung aufnimmt und in der die frische Lösung durch die Farben verschmutzt wird, mit einem ersten Behälter (3) für die verbrauchte Reinigungslösung, welcher die Lösung aus der Wischwanne (2) aufnimmt, mit einem zweiten Behälter (4), der die Reinigungslösung aus dem ersten Behälter (3) und ein Reagenz aufnimmt und in welchem dieses Reagenz mit der Lösung reagiert, um eine Lösung sowie sedimentierte Farbe zu bilden, wobei das Reagenz ein Copolymer mit einer Dichte von 1, 08 bis 1, 09 kg/dm³, einem pH von ungefähr 7, einem Molekulargewicht von ungefähr 500'000 und einer Brookfield-Viskosität von ungefähr 10'000 cps ist, mit einem Behälter (5) zum Dekantieren, welcher die Lösung und die sedimentierte Farbe aufnimmt, mit einem die konzentrierte Lösung aufnehmenden Behälter (6), der an den Dekantierbehälter (5) angeschlossen ist und die konzentrierte Lösung sowie die beim Dekantieren anfallende dekantierte Farbe aufnimmt, mit einem Filtersystem (7) zum Filtern der konzentrierten Lösung und der sedimentierten Farbe, mit einem Recycling-Behälter (8) zur Aufnahme der den Dekantierbehälter (5) verlassenden sauberen Lösung und der das Filtersystem (7) verlassenden sauberen Lösung, wobei der Recycling-Behälter (8) an den Kreislauf zum Herstellen der frischen Reinigungslösung angeschlossen ist, sowie mit Mitteln zum Pumpen und Übertragen der erwähnten Lösungen von einem zum anderen Behälter.

6. Vorrichtung nach Anspruch 5, **dadurch gekennzeichnet, dass** sie eine Einheit (9) zum Ultrafiltrieren der aus dem Recycling-Behälter (8) stammenden sauberen Lösung aufweist.

7. Vorrichtung nach Anspruch 6, **dadurch gekennzeichnet, dass** die frische Reinigungslösung aus enthärtetem Wasser, sulfoniertem Rizinusöl und Natriumhydroxid NaOH zusammengesetzt ist, dass die Vorrichtung einen dritten Behälter (10) aufweist, in welchem die Konzentration der der sauberen Lösung zugegebenen Zusätze korrigiert wird, und dass sie Mittel aufweist, um Natriumhydroxid NaOH und sulfoniertes Rizinunsöl in die zum Herstellen der frischen Reinigungslösung dienende Einheit (1) und in den zum Korrigieren der Lösung dienenden Behälter (10) einzugeben.

8. Vorrichtung nach Anspruch 7, **dadurch gekennzeichnet, dass** die frische Reinigungslösung ungefähr 98,5% wässrige Lösung, ungefähr 1% Natriumhydroxid NaOH und ungefähr 0,5% sulfoniertes Rizinusöl enthält.

## Claims

1. A process for producing a fresh wiping solution comprising at least softened water and for treating the wiping solution contaminated by the inks of one or more intaglio printing machines, wherein said process comprises the following steps:
(a) production of the fresh wiping solution,
(b) introduction of the fresh wiping solution into one or more wiping tanks, where it is contaminated by the inks,
(c) treatment of the used solution exiting from the wiping tank or tanks with a chemical agent, producing a solution and sedimented ink,
(d) separation by settling of the solution obtained in step (c), producing a clean solution and a concentrated solution with sedimented ink,
(e) filtration of the concentrated solution, producing a clean solution and solid waste,
(f) use of the clean solution obtained in steps (d) and (e) as fresh wiping solution, the chemical agent being a copolymer having the following characteristics:
- density: 1.08 to 1.09 kg/dm³
- pH: approximately 7
- molecular weight: approximately 500,000
- Brookfield viscosity: approximately 10,000 cPs.

2. Process according to claim 1, **characterized in that** before step (f), the process comprises a step of filtration (g) of the clean solution obtained in the steps of separation by settling (d) and of filtration (e).

3. Process according to claim 2, wherein the wiping solution comprises softened water, caustic soda NaOH and sulfonated castor oil as additives, **characterized in that** the step of production of the fresh wiping solution comprises mixing the softened water with said additives and **in that** the clean solution is subjected to a step (h) of correction of the concentration of said additives before it is used as fresh wiping solution in step (f).

4. Process according to claim 3, **characterized in that** the fresh wiping solution contains approximately 98.5% of softened water, approximately 1% of caustic soda NaOH and approximately 0.5% of sulfonated castor oil.

5. Apparatus for carrying out a process for producing a fresh wiping solution composed of at least softened water and for treating the wiping solution contaminated by the inks of one or more intaglio printing machines, said apparatus being composed of at least one unit for the production of fresh wiping solution (1) and at least one wiping tank (2), which receives the fresh wiping solution and in which the fresh solution is contaminated by the inks, and comprising a first tank for used wiping solution (3) collecting the solution from the wiping tank (2), a second tank (4) which receives the wiping solution from the first tank (3) and a chemical agent, in which the chemical agent reacts with the solution to produce a solution and sedimented ink, the chemical agent being a copolymer with a density of 1.08 - 1.09 kg/dm³, a pH of approximately 7, a molecular weight of approximately 500,000, a Brookfield viscosity of approximately 10,000 cPs, a tank for separation by settling (5) receiving the solution and the sedimented ink, a concentrated solution tank (6) connected to the tank for separation by settling (5) receiving the concentrated solution and the sedimented ink which result from the separation by settling, a filtration system (7) filtering the concentrated solution and the sedimented ink, a recycling tank (8) receiving the clean solution leaving the tank for separation by settling (5) and the clean solution resulting from the filtering system (7), said recycling tank (8) being connected to the fresh wiping solution production line, and pumping and transfer means for transferring said solutions from one tank to another.

6. Apparatus according to claim 5, **characterized in that** it comprises an ultrafiltration unit (9) which ultrafilters the clean solution resulting from the recycling tank (8).

7. Apparatus according to claim 6, **characterized in that** the fresh wiping solution is composed of softened water, of sulfonated castor oil and of caustic soda NaOH, **in that** it comprises a third tank (10) in which the concentration of the additives in the clean solution is corrected, and **in that** it comprises means for adding the caustic soda NaOH and the sulfonated castor oil to the unit for producing fresh wiping solution (1) and to the solution correction tank (10).

8. Apparatus according to claim 7, **characterized in that** the fresh wiping solution contains approximately 98.5% of softened water, approximately 1% of caustic soda NaOH and approximately 0.5% of sulfonated castor oil.
